# EUROPÄISCHE PATENTANMELDUNG

(11) **EP 4 074 155 A1**
(43) Veröffentlichungstag der Anmeldung: **19.10.2022**
(21) Anmeldenummer: 22161761.6
(22) Anmeldetag: 14.03.2022
(51) Int. Cl.: A01B 15/16, A01B 21/08

(54) **SCHEIBENEGGE MIT MITTIG ANGEORDNETER BEARBEITUNGSSCHEIBE**

(30) Priorität: 01.04.2021 DE 102021108421
(71) Anmelder: Pöttinger Landtechnik GmbH, 4710 Grieskirchen (AT)
(72) Erfinder: Stadlbauer, Franz, 4710 Grieskirchen (AT); Kirchmayr, Alois, 4710 Grieskirchen (AT); Juzek, Jiri, 4710 Grieskirchen (AT); Fara, Mira, 4710 Grieskirchen (AT)
(74) Vertreter: Thoma, Michael

(57) **Zusammenfassung**

Die vorliegende Erfindung betrifft eine Scheibenegge (1), mit zumindest zwei hintereinander angeordneten Bodenwerkzeugreihen (2, 3), die sich quer zur Fahrtrichtung (4) erstrecken und jeweils eine Vielzahl nebeneinander angeordnete Schrägscheiben (5) umfassen, wobei die Schrägscheiben in jeder der beiden genannten Bodenwerkzeugreihen gruppenweise zu unterschiedlichen Seiten hin zur Fahrtrichtung schräg angestellt sind und vorzugsweise auch hintereinander herlaufende Schrägscheibengruppen zu unterschiedlichen Seiten hin schräg zur Fahrtrichtung angestellt sind, wobei etwa mittig zwischen den schräg angestellten Schrägscheibengruppen eine zusätzliche, abweichend angestellte und/oder ausgebildete Bodenbearbeitungsscheibe (10), insbesondere Wellsechscheibe vorgesehen ist.

## Beschreibung

Die vorliegende Erfindung betrifft eine Scheibenegge, mit zumindest zwei hintereinander angeordneten Bodenwerkzeugreihen, die sich quer zur Fahrtrichtung erstrecken und jeweils eine Vielzahl nebeneinander angeordnete Schrägscheiben umfassen, wobei die Schrägscheiben in jeder der genannten zwei Reihen gruppenweise zu unterschiedlichen Seiten hin zur Fahrtrichtung schräg angestellt sind und auch hintereinander herlaufende Scheibengruppen zu unterschiedlichen Seiten hin schräg zur Fahrtrichtung angestellt sind.

Solche Scheibeneggen sind üblicherweise als Anbaugeräte ausgebildet, die über einen Anbaubock oder ggf. auch als gezogene Geräte über eine Deichsel an einen Schlepper angebaut werden können, um den Stoppelteppich zu stürzen, Ernterückstände zu durchmischen, den Boden aufzulockern oder allgemein das Saatbett vorzubereiten. Dabei können solche Scheibeneggen als Einzelgerät ausgebildet, ggf. aber auch Teil einer Gerätekombination wie beispielsweise einer Sämaschinenkombination sein.

Um eine effiziente Bodenbearbeitung zu erzielen, haben solche Scheibeneggen üblicherweise mehrere Bodenwerkzeugreihen, die sich quer zur Fahrtrichtung erstrecken und eine Vielzahl nebeneinander angeordneter, zur Fahrtrichtung schräg angestellte Schrägscheiben umfassen, wobei es üblich ist, die Schrägscheiben einer hinterherlaufenden Reihe gegenläufig zu den Scheiben einer vorauslaufenden Reihe anzustellen, um eine intensivere Bodenbearbeitung zu erzielen und vor allen Dingen auch den Schrägzug der Scheiben auszugleichen. Diesbezüglich wurde auch schon vorgeschlagen, die Bodenwerkzeugreihen in sich zu unterteilen und innerhalb der Reihen die Scheiben gruppenweise gegenläufig schräg anzustellen, um den Schrägzug schon in der Bodenwerkzeugreihe selbst zu kompensieren. Während eine Schrägscheibengruppe zur linken Seite hin schräggestellt wird, ist eine andere Schrägscheibengruppe zur rechten Seite hin schräggestellt, wobei beispielsweise pro Bodenwerkzeugreihe zwei Schrägscheibengruppen vorgesehen und gegenläufig zueinander angestellt sein können.

Auch bei einer solchen Schrägscheibengruppierung innerhalb der Reihen können die hintereinander herlaufenden Reihen wiederum gegenläufige Schrägstellungen aufweisen, beispielsweise dergestalt, dass die Scheiben einer Reihe allesamt nach innen werfen und die Scheiben der anderen Reihe allesamt nach außen werfen.

Eine solche doppelt gegenläufige Schrägstellung der Scheiben, bei der Scheibengruppen innerhalb einer Reihe gegenläufig schräg angestellt und auch hintereinander herlaufende Scheibengruppen verschiedener Reihen gegenläufig zueinander schräggestellt sind, wird bisweilen auch als X-Anordnung bezeichnet, und zeichnet sich durch den Vorteil aus, dass die Maschine geradlinig im Wesentlichen ohne Seitenzug hinter dem Schlepper herläuft.

Eine Scheibenegge der genannten Art zeigt beispielsweise die Schrift EP 20 61 300 B1, bei der die Bodenwerkzeugreihen hinsichtlich der Scheibenschrägstellung mittig geteilt sind, sodass die Scheiben in der rechten Hälfte einer Reihe gegenläufig zu den Scheiben in der linken Hälfte der Reihe angestellt sind. Gleichzeitig sind hintereinander herlaufende Schrägscheibengruppen zueinander gegenläufig schräggestellt. Konkret wird dies dadurch erreicht, dass die Scheiben der vorauslaufenden Reihe allesamt nach außen werfen, während die Scheiben der nachlaufenden Reihe nach innen werfen.

Ähnliche Schiebeneggen sind auch in den Schriften DE 10 2010 054 946 B4 und WO 2012/079567 A2 gezeigt.

Auch wenn solche Scheibeneggen mit X-Anordnung der Schrägscheiben im Wesentlichen seitenzugfrei hinter dem Schlepper herlaufen, ergibt sich durch die X-Anordnung der Schrägscheiben die Problematik, dass üblicherweise der Mittelstreifen im Übergangsbereich zwischen den gegenläufig schräggestellten Scheiben unbearbeitet bleibt bzw. sich je nach Schrägstellung der nachlaufenden Bodenwerkzeugreihe eine Längsfurche oder ein Längswall aufgeworfenen Materials ergibt, sodass die von der Scheibenegge bearbeitete Fahrgasse nicht gleichmäßig über die gesamte Breite bearbeitet ist. Diese Problematik resultiert daraus, dass die unmittelbar benachbarten, zueinander gegenläufig schräggestellten Scheiben nicht beliebig nahe aneinander positioniert werden können, da sie sonst aufgrund ihrer gegenläufigen Schrägstellung miteinander kollidieren würden.

Es wurde daher bereits vorgeschlagen, zwischen den Bodenwerkzeugreihen weitere Bodenbearbeitungswerkzeuge vorzusehen, die zumindest näherungsweise in der Spur des Übergangsbereichs der gegenläufig schräggestellten Schrägscheibengruppen laufen und den von den Schrägscheiben unbearbeiteten Streifen bearbeiten sollen, vgl. beispielsweise EP 35 81 007 A1 oder US 9,313,937 B2. Solche zusätzlichen Schrägscheiben zwischen den eigentlichen Bodenwerkzeugreihen benötigen jedoch in Fahrtrichtung relativ viel Platz und schieben insbesondere die Bodenwerkzeugreihen in Fahrtrichtung relativ weit auseinander, vgl. beispielsweise EP 35 81 007 A1, wodurch die Bodenanpassung der Maschine leidet, insbesondere wenn die Bodenwerkzeugreihen nacheinander über Querbodenwellen hinwegfahren bzw. in diese eintauchen sollen.

Der vorliegenden Erfindung liegt die Aufgabe zugrunde, eine verbesserte Scheibenegge der genannten Art zu schaffen, die Nachteile des Standes der Technik vermeidet und letzteren in vorteilhafter Weise weiterbildet. Insbesondere soll eine über die Arbeitsbreite der Maschine gleichmäßige Bodenbearbeitung ohne Dämme und Furchen in Übergangsbereichen und gleichzeitig ein stabiles Nachlaufen der Maschine ohne Seitenzug erreicht werden, ohne dies durch einen sperrigen, raumgreifenden Maschinenaufbau und eine damit einhergehende Beeinträchtigung der Bodenanpassung zu erkaufen.

Erfindungsgemäß wird die genannte Aufgabe durch eine Scheibenegge gemäß Anspruch 1 gelöst. Bevorzugte Ausgestaltungen der Erfindung sind Gegenstand der abhängigen Ansprüche.

Es wird also vorgeschlagen, im Übergangsbereich zwischen den gegenläufig angestellten Schrägscheibengruppen eine weitere Bodenbearbeitungsscheibe anzuordnen, die den zwischen den Schrägscheibengruppen verbleibenden Bodenstreifen vergleichmäßigend bearbeitet und keine weiteren Wälle zu einer Seite hin aufwirft. Erfindungsgemäß ist etwa mittig zwischen den schräg angestellten Schrägscheibengruppen eine zusätzliche, von den Schrägscheiben abweichend angestellte und/oder abweichend ausgebildete Bodenbearbeitungs-, insbesondere Wellsechscheibe vorgesehen, um den Bodenstreifen, der zwischen den schräg angestellten Schrägscheibengruppen unbearbeitet bleibt bzw. nicht richtig bearbeitet wird, ergänzend zu bearbeiten. Die zusätzliche, etwa mittig angeordnete Bodenbearbeitungsscheibe ist dabei vorzugsweise derart ausgerichtet und angestellt, dass sie keinen signifikanten Seitenzug generiert, sodass im Zusammenspiel mit den sich gegenseitig etwa austarierenden Schrägscheibengruppen kein Seitenzug entsteht, dennoch aber kein ungleichmäßiger Mittelstreifen verbleibt. Eine solche Wellsechscheibe kann nicht nur platzsparend in dem beengten Zwischenraum zwischen zwei benachbarten, zueinander gegenläufig angestellten Schrägscheiben untergebracht werden, sondern sie ermöglicht durch ihre reliefartige Flankenkonturierung auch eine vergleichmäßigende Bodenbearbeitung des sozusagen übriggebliebenen Streifens zu beiden Seiten hin, ohne erneut Furchen zu ziehen oder Wälle aufzuwerfen. Gleichzeitig kann ein zusätzlicher, nicht austarierter Seitenzug vermieden werden.

Insbesondere kann die genannte zusätzliche Bodenbearbeitungs-, insbesondere Wellsechscheibe mittig zwischen den gegenläufig angestellten Schrägscheibengruppen selbst im Wesentlichen fahrtrichtungsparallel angestellt sein, sodass die zusätzliche Bodenbearbeitungs-, insbesondere Wellsechscheibe weder Seitenzug nach links noch Seitenzug nach rechts verursacht. Durch die zumindest näherungsweise fahrtrichtungsparallele Ausrichtung der zusätzlichen Bodenbearbeitungs-, insbesondere Wellsechscheibe kann diese auch den beengten Zwischenraum zwischen den gegenläufig angestellten Schrägscheibengruppen gut nutzen, ohne selbst eine Kollisionsproblematik zu verursachen.

In vorteilhafter Weiterbildung der Erfindung ist die genannte zusätzliche Bodenbearbeitungs-, insbesondere Wellsechscheibe in Fahrtrichtung etwa auf Höhe der benachbarten Schrägscheiben positioniert. Während die mittig angeordnete zusätzliche Bodenbearbeitungs-, insbesondere Wellsechscheibe sich in Fahrtrichtung im Wesentlichen ohne Versatz zu den benachbarten Schrägscheiben in die Bodenwerkzeugreihe einfügt, kann die zusätzliche Bodenbearbeitungs-, insbesondere Wellsechscheibe je nach Scheibendurchmesser ggf. mit ihrer Scheibenachse einen gewissen Höhenversatz nach oben oder unten gegenüber den Scheibenachsen der benachbarten Schrägscheiben haben.

Die zusätzliche Bodenbearbeitungs-, insbesondere Wellsechscheibe kann aber auch im Wesentlichen ohne einen solchen Höhenversatz zu den benachbarten Schrägscheiben in die Bodenwerkzeugreihe eingefügt sein. Insbesondere können die mittige zusätzliche Bodenbearbeitungs-, insbesondere Wellsechscheibe und die benachbarten Schrägscheiben mit ihren Scheibenmittelpunkten auf einer gemeinsamen Querachse angeordnet sein, die durch die genannten Scheibenmittelpunkte geht. Da die benachbarten Schrägscheiben mit ihren Scheibenachsen verkippt angeordnet sind, ist die genannte gemeinsame Querachse keine gemeinsame tatsächliche Drehachse der Scheiben. Nichtsdestotrotz können die Schrägscheibengruppen mit ihren Scheibenmittelpunkten in etwa auf einer gemeinsamen, gedachten Achse aufgereiht sein, auf der dann auch die hinzukommende, mittige zusätzliche Bodenbearbeitungs-, insbesondere Wellsechscheibe angeordnet sein kann.

Durch die Eingliederung der zusätzlichen Bodenbearbeitungs-, insbesondere Wellsechscheibe in die jeweilige Bodenwerkzeugreihe im Wesentlichen ohne Versatz in Fahrtrichtung zu den Nachbarscheiben wird vorteilhafterweise kein zusätzlicher Bauraum für die zusätzliche Bodenbearbeitungs-, insbesondere Wellsechscheibe benötigt. Dennoch kann der Boden über die gesamte Arbeitsbreite der Bodenwerkzeugreihe homogen und gleichmäßig bearbeitet werden. Zusätzlich können die Bodenwerkzeugreihen in Fahrtrichtung betrachtet sehr nahe aneinander angeordnet werden, sodass eine hervorragende Bodenanpassung erreicht wird, insbesondere auch wenn quer verlaufende Bodenwellen überfahren werden.

Die zu der zusätzlichen Bodenbearbeitungs-, insbesondere Wellsechscheibe benachbarten Schrägscheibengruppen können in vorteilhafter Weiterbildung der Erfindung symmetrisch bezüglich einer aufrechten, durch die zusätzliche Bodenbearbeitungs-, insbesondere Wellsechscheibe gehenden Längsmittelebene angeordnet sein. Durch eine insgesamt mittige bzw. symmetrische Gruppierung der gegenläufig schräg angestellten Scheibengruppen kann insgesamt ein Schrägzug vermieden bzw. kompensiert werden, sodass die Maschine dem Schlepper stabil nachläuft, ohne zu einer Seite hin zu ziehen.

In Weiterbildung der Erfindung kann es ausreichend sein, in nur einer der Bodenwerkzeugreihen eine solche zusätzliche Bodenbearbeitungs-, insbesondere Wellsechscheibe vorzusehen. Alternativ kann aber auch jede Bodenwerkzeugreihe - oder je nach Anzahl der Bodenwerkzeugreihen können auch drei oder allgemein mehrere Bodenwerkzeugreihen - eine solche zusätzliche Bodenbearbeitungs-, insbesondere Wellsechscheibe aufweisen.

Ist nur eine der zumindest zwei Bodenwerkzeugreihen mit einer solchen zusätzlichen Bodenbearbeitungs-, insbesondere Wellsechscheibe ausgerüstet, kann dies grundsätzlich die vorauslaufende oder die nachlaufende Bodenwerkzeugreihe sein.

Vorteilhafterweise kann die zusätzliche Bodenbearbeitungs-, insbesondere Wellsechscheibe in einer Bodenwerkzeugreihe vorgesehen sein, deren Schrägscheiben derart schräg zur Fahrtrichtung angestellt sind, dass die Schrägscheiben zur Mitte hin werfend arbeiten. Die Schrägscheiben können dabei jeweils weiter außenliegende Vorderkanten und weiter innenliegende Hinterkanten besitzen, sodass sich insgesamt betrachtet eine in Fahrtrichtung nach vorne aufweitende V-Stellung der Scheiben ergibt.

Grundsätzlich wäre es in alternativer Weiterbildung der Erfindung aber auch möglich, die zusätzliche Bodenbearbeitungs-, insbesondere Wellsechscheibe in einer Bodenwerkzeugreihe anzuordnen, deren Schrägscheiben nach außen werfend schräggestellt sind, sodass die Schrägscheibengruppen insgesamt betrachtet eine schneepflugartige V-Stellung bzw. eine sich entgegen der Fahrtrichtung aufweitende V-Stellung besitzen.

Unabhängig von der Anordnung der zusätzlichen Bodenbearbeitungs-, insbesondere Wellsechscheibe kann eine vorauslaufende Bodenwerkzeugreihe nach außen werfende Schrägscheiben und eine nachlaufende Bodenwerkzeugreihe nach innen werfende Schrägscheiben besitzen.

In alternativer Weiterbildung der Erfindung wäre es aber auch möglich, die vorauslaufende Bodenwerkzeugreihe so zu konfigurieren, dass die Schrägscheiben nach innen werfen und die nachlaufende Bodenwerkzeugreihe nach außen werfend auszubilden.

Die Wellsechscheibe kann grundsätzlich in verschiedener Art und Weise konturiert sein. Vorteilhafterweise besitzt die Wellsechscheibe eine beidseitig lockernde und/oder symmetrisch werfende Reliefstruktur, die zu gegenüberliegenden Seiten hin ballige und/oder eingedellte Konturabschnitte besitzen kann. Insbesondere können die gegenüberliegenden Flanken bzw. Flachseiten der Wellsechscheibe jeweils mit einer Reliefstruktur versehen sein, wobei die gegenüberliegenden Reliefstrukturen im Wesentlichen gleich bzw. komplementär zueinander ausgebildet sein können, sodass die Wellsechscheibe zu gegenüberliegenden Seiten hin gleichermaßen den Boden lockert.

Insbesondere kann die Wellsechscheibe an ihren Flachseiten bzw. Flanken ein in Umfangsrichtung mäanderndes Wellenprofil besitzen. Beispielsweise können vom Scheibenmittelpunkt ausgehend strahlenförmig Wellen und Senken vorgesehen sein, wobei sich solche Wellen und Senken nicht über den gesamten Radius oder Durchmesser der Scheibe erstrecken müssen - was sie gleichwohl können. Beispielsweise kann es auch ausreichend sein, einen äußeren Umfangskranz der Scheibe gewellt oder in anderer Weise reliefartig konturiert auszubilden.

Die Erfindung wird nachfolgend anhand eines bevorzugten Ausführungsbeispiels und zugehörigen Zeichnungen näher erläutert. In den Zeichnungen zeigen:
- Fig. 1:: eine Seitenansicht einer Scheibenegge mit zwei Bodenwerkzeugreihen nach einer vorteilhaften Ausführung der Erfindung,
- Fig. 2:: eine Frontansicht der Scheibenegge aus Fig. 1,
- Fig. 3:: eine Draufsicht auf die Scheibenegge aus den vorhergehenden Figuren, die die gegenläufige Schrägstellung der Schrägscheibengruppen in den Bodenwerkzeugreihen und die mittig angeordnete, in eine der Bodenwerkzeugreihen eingegliederte Wellsechscheibe zeigt, und
- Fig. 4:: eine perspektivische Ansicht der Scheibenegge aus den vorhergehenden Figuren.

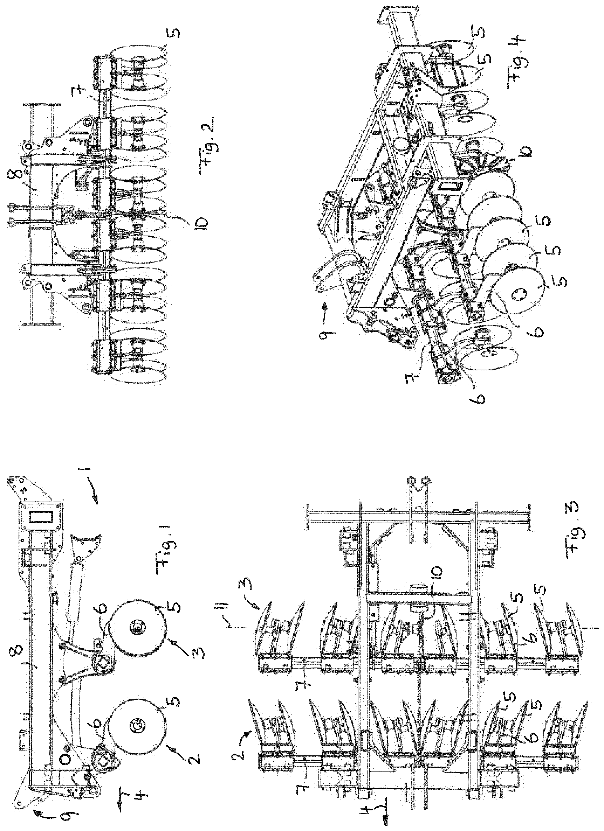

Wie Figur 1 zeigt, kann die Scheibenegge 1 zwei hintereinanderlaufende Bodenwerkzeugreihen 2, 3 umfassen, die sich jeweils quer zur Fahrtrichtung 4 erstrecken und jeweils eine Vielzahl an nebeneinander angeordneten Schrägscheiben 5 umfassen können, die die Bodenbearbeitungswerkzeuge bilden und den Boden bearbeiten.

Die genannten Schrägscheiben 5 können dabei einzeln oder paarweise an einem Tragarm 6 drehbar gelagert sein, der die Scheibe bzw. die mehreren zusammengefassten Scheiben jeweils an einem Querträger 7 des Maschinenrahmens 8 abstützt.

In an sich bekannter Weise können die genannten Tragarme 6 an den genannten Querträgern 7 rotatorisch nachgiebig, vorzugsweise aber vorgespannt gelagert sein, beispielsweise mittels per se bekannter Gummiquetschlager, sodass die an den Tragarmen 6 gelagerten Schrägscheiben 5 bei Auffahren auf Hindernisse ggf. nach oben ein Stück weit ausweichen, andererseits aber vom Gewicht der Maschine bzw. auch vom Schlepper her gegen den Boden gedrückt werden können. Die genannten Tragarme 6 können sich beispielsweise von den Querträgern 7 schräg nach hinten und unten erstrecken, vgl. Figur 1.

Ohne dass dies in den Figuren gezeigt ist, können die Querträger 7 ggf. klappbar ausgebildet sein, um die Maschinenbreite für den Straßentransport reduzieren zu können.

Die Scheibenegge 1 kann als Anbaugerät zum Anbau an einen nicht gezeigten Schlepper ausgebildet sein, wobei der Maschinenrahmen 8 beispielsweise über einen Anbaubock 9 über eine Dreipunktanlenkung mit Ober- und Unterlenkern oder auch durch eine andere Anbauvorrichtung am Schlepper befestigt werden kann.

Wie Figur 3 zeigt, kann jede Bodenwerkzeugreihe 2 und 3 in zueinander gegenläufig schräg zur Fahrtrichtung angestellte Schrägscheibengruppen unterteilt sein, wobei die Bodenwerkzeugreihen 2 und 3 jeweils mittig in solche gegenläufig angestellten Schrägscheibengruppen unterteilt sein kann.

Die Schrägscheiben 5 in einer rechten Hälfte einer jeden Bodenwerkzeugreihe 2, 3 kann bezüglich der Fahrtrichtung zu einer Seite hin schräg angestellt sein, während die Schrägscheiben 5 in der linken Hälfte der Bodenwerkzeugreihe bezüglich der Fahrtrichtung zur gegenüberliegenden Seite hin schräg angestellt sind.

Ferner können die Schrägscheiben 5 auch von Bodenwerkzeugreihe zu Bodenwerkzeugreihe gegenläufig schräg angestellt sein, insbesondere derart, dass einander nachlaufende Schrägscheibengruppen bezüglich der Fahrtrichtung gegenläufig schräg angestellt sind. Wie Figur 3 zeigt, können beispielsweise die Schrägscheiben 5 einer linken Hälfte der vorauslaufenden Bodenwerkzeugreihe 2 zur Fahrtrichtung nach rechts verkippt sein, während die Schrägscheiben 5 in der besagten linken Hälfte der hinteren Bodenwerkzeugreihe 3 nach links verkippt sein können. In der rechten Werkzeughälfte der Werkzeugreihen 2, 3 ist eine dazu spiegelbildliche Verkippung vorgesehen.

Mit anderen Worten können die Schrägscheiben 5 einer Werkzeugreihe nach außenwerfend angeordnet sein, während die Schrägscheiben 5 der anderen Werkzeugreihe nach innenwerfend angeordnet sein können. Wie Figur 3 zeigt, kann beispielsweise die vorauslaufende Bodenwerkzeugreihe 2 nach außenwerfende Schrägscheiben 5 umfassen, während die nachlaufende Bodenwerkzeuge 3 nach innenwerfende Schrägscheiben umfasst.

Die beiden Bodenwerkzeugreihen 2 und 3 sind dabei mittig geteilt und die Schrägscheiben 5 einer jeden Werkzeugreihe 2 und 3 sind zueinander spiegelbildlich bzw. symmetrisch bezüglich einer Längsmittelebene schräg angestellt, sodass sich der Schrägzug der Scheiben innerhalb einer jeden Reihe kompensiert.

Wie Figur 3 weiterhin zeigt, umfasst zumindest eine der Bodenwerkzeugreihen 3 mittig zwischen den gegenläufig schräg angestellten Schrägscheiben 5 eine Wellsechscheibe 10, die von ihrer Position her in die Scheibenreihe 3 mehr oder minder vollständig integriert bzw. eingegliedert ist.

Die genannte Wellsechscheibe 10 erstreckt sich vorzugsweise fahrtrichtungsparallel und kann eine Scheibendrehachse umfassen, die sich liegend quer zur Fahrtrichtung erstreckt.

Vorteilhafterweise ist die etwa mittig angeordnete Wellsechscheibe 10 in Fahrtrichtung weder nach vorne noch nach hinten versetzt, sondern im Wesentlichen in Fahrtrichtung auf derselben Höhe wie die benachbarten Schrägscheiben 5 angeordnet.

Wie Figur 3 zeigt, können die Scheibenmittelpunkte der Schrägscheiben 5 der Bodenwerkzeugreihe 3 und der darin mittig eingegliederten Wellsechscheibe 10 zumindest näherungsweise auf einer gemeinsamen, gedachten Linie angeordnet sein, die sich quer zur Fahrtrichtung liegend erstreckt und die Längsachse der Werkzeugreihe definiert.

Wie Figur 3 zeigt, kann die gemeinsame Linie, entlang der die Schrägscheiben 5 und die Wellsechscheibe 10 der Bodenwerkzeugreihe 3 mit ihren Mittelpunkten aufgereiht sind, eine Gerade bilden, die sich liegend quer zur Fahrtrichtung erstreckt. Grundsätzlich wäre es aber auch möglich, dass sich die gedachte Linie entlang der die Scheibenmittelpunkte aufgereiht sind, auch ein leichtes V bildet, sodass die Scheibenreihe insgesamt betrachtet eine leichte pfeilförmige Anordnung besitzen würde. Alternativ wäre es auch möglich, dass sich die gedachte Linie der Scheibenmittelpunkte leicht bogenförmig gekrümmt nach Art einer Sichel erstreckt. Bevorzugt ist jedoch die in den Figuren gezeigte, gerade Ausbildung der gedachten Linie, entlang der die Scheibenmittelpunkte der Bodenwerkzeugreihe 3 mit der Wellsechscheibe 10 aufgereiht sind.

Wie Figur 3 zeigt, kann die Wellsechscheibe 10 in der nachlaufenden Bodenwerkzeugreihe 3 und/oder in der Bodenwerkzeugreihe 3, deren Schrägscheiben 5 nach innenwerfend angestellt sind, angeordnet sein. Wie eingangs erläutert, sind aber auch andere Konfigurationen möglich.

Die genannte Wellsechscheibe 10 kann eine, wie Figur 3 zeigt, in Umfangsrichtung mäandernde Wellenkontur besitzen, sodass die Wellsechscheibe an ihren Flanken in Umfangsrichtung abwechselnd ausbaucht und eingedellt ist. Unabhängig hiervon kann die Wellsechscheibe 10 an ihrer Umfangskontur eine zinnenförmig gezackte oder gewellte Kontur besitzen, wobei ggf. auch eine gleichmäßige, auf einem Hüllflächenzylinder liegende Umfangskontur vorgesehen sein kann.

Die Schrägscheiben 5 können an ihren Flanken glatt konturiert sein und/oder eine glatte Umfangskontur besitzen, wobei aber auch die Schrägscheiben 5 grundsätzlich flanken- und/oder umfangsseitig reliefartig konturiert sein können. Insbesondere können die Schrägscheiben 5, wie dies die Figuren zeigen, im Wesentlichen glatt ausgebildete, tellerförmige Hohlscheiben sein.

## Patentansprüche

1. Scheibenegge, mit zumindest zwei hintereinander angeordneten Bodenwerkzeugreihen (2, 3), die sich quer zur Fahrtrichtung (4) erstrecken und jeweils eine Vielzahl nebeneinander angeordnete Schrägscheiben (5) umfassen, wobei die Schrägscheiben in jeder der beiden genannten Bodenwerkzeugreihen (2, 3) gruppenweise zu unterschiedlichen Seiten hin zur Fahrtrichtung schräg angestellt sind und vorzugsweise auch hintereinander herlaufende Schrägscheibengruppen zu unterschiedlichen Seiten hin schräg zur Fahrtrichtung angestellt sind, **dadurch gekennzeichnet, dass** etwa mittig zwischen den schräg angestellten Schrägscheibengruppen (5) eine zusätzliche, abweichend angestellte und/oder ausgebildete Bodenbearbeitungs-, insbesondere Wellsechscheibe (10) vorgesehen ist.

2. Scheibenegge nach dem vorhergehenden Anspruch, wobei die genannte zusätzliche, etwa mittige Bodenbearbeitungsscheibe (10) fahrtrichtungsparallel angestellt ist.

3. Scheibenegge nach einem der vorhergehenden Ansprüche, wobei die genannte zusätzliche, etwa mittige Bodenbearbeitungsscheibe (10) in Fahrtrichtung auf Höhe der benachbarten Schrägscheiben (5) angeordnet ist.

4. Scheibenegge nach dem vorhergehenden Anspruch, wobei die zusätzliche, etwa mittige Bodenbearbeitungsscheibe (10) und die benachbarten Schrägscheiben (5) der Bodenwerkzeugreihe (3), in die die zusätzliche, etwa mittige Bodenbearbeitungsscheibe (10) eingegliedert ist, mit ihren Scheibenmittelpunkten auf einer gemeinsamen Querachse (11) aufgereiht sind.

5. Scheibenegge nach einem der vorhergehenden Ansprüche, wobei die schräg angestellten Schrägscheibengruppen symmetrisch bezüglich einer aufrechten, durch die zusätzliche, etwa mittige Bodenbearbeitungsscheibe (10) gehenden Längsmittelebene der Scheibenegge angeordnet sind.

6. Scheibenegge nach einem der vorhergehenden Ansprüche, wobei die Wellsechscheibe (10) eine symmetrisch werfende und/oder beidseitig lockernde Reliefkontur mit zu gegenüberliegenden Seiten hin vorspringenden Ausbauchungen und/oder Eindellungen aufweist.

7. Scheibenegge nach einem der vorhergehenden Ansprüche, wobei die Wellsechscheibe (10) ein in Umfangsrichtung mäanderndes Wellenprofil besitzt.

8. Scheibenegge nach einem der vorhergehenden Ansprüche, wobei die Wellsechscheibe (10) einen Umfangsrand mit einer gezahnten oder gewellten Konturierung besitzt.

9. Scheibenegge nach einem der vorhergehenden Ansprüche, wobei die zusätzliche, etwa mittige Bodenbearbeitungsscheibe (10) in eine Bodenwerkzeugreihe (3) eingegliedert ist, deren Schrägscheiben (5) zur Reihenmitte hin werfend schräggestellt sind.

10. Scheibenegge nach einem der vorhergehenden Ansprüche, wobei die zusätzliche, etwa mittige Bodenbearbeitungsscheibe in einer nachlaufenden Bodenwerkzeugreihe (3) angeordnet ist.

11. Scheibenegge nach einem der vorhergehenden Ansprüche, wobei die Schrägscheiben (5) der vorauslaufenden Bodenwerkzeugreihe (2) zu Außenseite hin werfend schräggestellt und die Schrägscheiben (5) einer nachlaufenden Bodenwerkzeugreihe (3) zur Reihenmitte hin werfend schräggestellt sind.

12. Scheibenegge nach einem der vorhergehenden Ansprüche, wobei die Schrägscheiben (5) als glatte, tellerförmige Hohlscheiben ausgebildet sind.

13. Scheibenegge nach einem der vorhergehenden Ansprüche, wobei der Abstand der Bodenwerkzeugreihen (2, 3) voneinander in Fahrtrichtung betrachtet weniger als 200 % eines Durchmessers der Schrägscheiben (5) beträgt.
